# EUROPEAN PATENT SPECIFICATION

(11) **EP 1 685 944 B1**
(45) Date of publication and mention of the grant of the patent: **14.09.2011**
(21) Application number: 03772751.8
(22) Date of filing: 13.11.2003
(51) Int. Cl.: B29C 51/08, B65D 39/02

(54) **DEVICE AND METHOD FOR FORMING A RESIN COVER**
VORRICHTUNG UND VERFAHREN ZUR HERSTELLUNG EINES DECKELS AUS KUNSTSTOFF
DISPOSITIF ET PROCÉDÉ DE FORMAGE DE COUVERCLES EN RESINE

(43) Date of publication of application: 02.08.2006
(73) Proprietor: Shikoku Kakoki Co., Ltd., Itano-gun, Tokushima-ken 771-0202 (JP); Kabushiki Kaisha Yakult Honsha, Tokyo 105-8860 (JP)
(72) Inventor: UEDA, Kazuo, SHIKOKU KAKOKI CO., LTD., Itano-gun, Tokushima 771-0202 (JP); SHINOHARA, Mitsuhiko, Tokushima-shi, Tokushima 770-0802 (JP); MIKI, Yoshifumi, SHIKOKU KAKOKI CO., LTD., Itano-gun, Tokushima 771-0202 (JP); KONDO, Hiroshi, SHIKOKU KAKOKI CO., LTD., Itano-gun, Tokushima 771-0202 (JP)
(74) Representative: Tanner, James Percival
(86) International application number: PCT/JP2003/014474
(87) International publication number: WO 2005/046967

(56) References cited:
- WO-A-97/19811
- GB-A- 884 979
- GB-A- 189 821 821
- JP-A- 47 006 739
- JP-A- 2003 165 565
- JP-A- 2003 165 566
- JP-A- 2003 226 349
- JP-A- 2003 267 422
- JP-A- 2004 011 230
- JP-B2- 1 044 406
- JP-B2- 2 949 149
- JP-B2- 55 006 023

## Description

### Technical Field

The present invention relates to a cap forming device for a sealed container, more particularly, to a forming device for a cap which is manufactured with a resin sheet for cold forming and which has a shape retaining property, a cap forming and capping device equipped with the forming device, and a method for forming a resin cap.

### Background Art

Conventionally, so-called general purpose polystyrene (GPPS) -based resin such as styrene homopolymerwhich is excellent in tensile strength, heat resistance, light resistance, formability and surface luster, and high impact polystyrene (HIPS) wherein rubber such as SBR and BR is blended with GPPS to reduce its brittleness, have been often used for food containers such as beverage containers, yogurt containers, portion containers, cup noodle containers, and for synthetic resin containers to be filled with disposable medical supplies, etc. As a cap material to be put together and seal an opening of such polystyrene-based resin container, an aluminum laminated body wherein an aluminum foil is used as a base material, a sealant layer, etc., for adhering to the container are provided on its surface, is used. A small piece of aluminum cap material being punched out into an extensive form of the cap from the aluminum laminated body thus described is formed into a shape with skirt by folding back its end, and sealed to the opening of the container. This type of aluminum cap is commonly used because of the following reasons: it has an excellent sealing property, a peel resistant property, and excellent stability at the time of peeling; when it is fed to the opening of the container, it shows low level of adhesion caused by static electricity, and feedability of sheet is good. In addition, the aluminum cap is excellent in so-called shape retaining property which is a property to maintain a folded and deformed shape when a skirt, which has been formed by folding back its peripheral part, is provided. Therefore, when drinking a filled beverage directly from the container, the state wherein the part in the vicinity of the opening of the container which comes into contact with a mouth is covered with the end of the cap, is well retained, and an area in the vicinity of the opening of the container can be prevented from getting dirty. It is thus excellent hygienically, and excellent in appearance as well. Therefore, it has been preferably used conventionally.

Recently, however, troubles that foreignmatters are mixed into containers of processed food occur frequently, and the safety measure has become a matter of concern. As it is impossible to use a metal detector for the containers using the above-mentioned aluminum caps, there is a problem that metals which are possibly mixed into the container, such as nails, staples, broken pieces of punching blade for formed products, bolts and nuts, wires, and springs, cannot be detected. Further, with regard to containers having these aluminum caps, as the aluminum caps and the container bodies made from synthetic resins such as polystyrene need to be collected separately as garbage, it has a defect of low recycling efficiency.

As an alternative for the conventional aluminum cap thus described, a cap, the whole of which is made of plastic, has been proposed. For example, there is a disclosure of a cap material manufactured by punching out a laminated material wherein a sealant layer is provided on the lower face of a laminated base material which has been constructed by laminating a heat-resistant film on both sides of a base material of a co-extruded film comprising a central layer constituted of high-density polyethylene and polypropylene-based polymer, and a coat layer constituted of high-density polyethylene, which is provided on both sides of the central layer, into a given shape (See Japanese Laid-Open Patent Application No. 1999-10810). However, these plastic caps are adhered to the end portions of the containers, and the outer circumference of the adhesive surface is not folded back but becomes a flat form extended directly from the adhesive surface, and therefore, there is a hygiene problem when drinking the filled beverage directly from the container. Further, in the case where the containers are made from polystyrene-based resins such as GPPS and HIPS, materials used for the cap and for the container body are different. Consequently, it is necessary to separate the cap from the container at the time of disposal.

The above-mentioned aluminum caps are formed by so-called press forming method wherein an aluminum packaging material sheet is plastically deformed and pulled into shape by sandwiching an aluminum foil material between a pair of a former (male die) and a forming die (female die), and then pushing the sheet into the forming die with the use of the former, and pressing at high speed, that is, so-called cold forming method. The formed aluminum cap has a shape retaining property, a property to retain its deformed shape. However, in case of a plastic cap, when the stress is added, the change of molecular conformation is strongly controlled by the thermodynamic behavior, therefore, there is a strong tendency that the shape is restored in press forming at a temperature lower than a glass transition point. Thus, at the time of demolding immediately after forming process, elasticity is restored and the forming accuracy cannot be obtained, and there occurs change with time after the process, as well. Consequently, by cold forming at a temperature lower than a glass transition point, it has been impossible to obtain a plastic cap having a shape retaining property enough to retain the state wherein the end portion is folded back faithfully to the shape of the die. Further, to obtain the shape retaining property of the cap made by cold forming, some attempts, such as to use a thick sheet or a hard material as cap material, have been conducted. However, the cap having a satisfactory shape retaining property cannot have been obtained, and in addition, an inconvenience, the deterioration of a peeling property, has been arisen.

In view of the above, the following method has been proposed: with the use of a laminated film comprising a thermoplastic resin biaxially oriented film and an unoriented low-temperature adhesive resin film, low-temperature heating is conducted for preforming the laminated film into a cap-like shape such that the unoriented low-temperature adhesive resin constitutes the inner side of the cap, and by placing the preformed product on a flange of a container and heat-shrinking it, a mouth of the container is adhesively sealed by the product which is used like a cap (Japanese Patent Publication No. 1981-57603). In this method, however, a resin is plastically deformed by heating, and a heating and cooling mechanism for resins is indispensable. Consequently, there occur inconveniences such as increase in size, greater complexity, speed down of cap forming devices and capping devices. Further, the forming device thus described is generally used in a continuous process, together with a filling device for filling a beverage, etc, into a container. In the above-mentioned method wherein a resin is heated to form a cap of a container, there is inconvenience that all the resin films for having forming piled-up in a heating zone have to be disposed when a trouble occurs in the line of forming and filling/sealing processes. To avoid such heating state, separate means to shunt a heating device has been necessary. Furthermore, there has been another problem that when driving a device, it needs some time to raise a temperature to a certain degree, and therefore the loss of container material sheets and time is inevitable.

In addition, the followings are disclosed: a method for plastically deforming a resin film, which is carried out by heating the tip of a pinholder-like jig to a temperature equal to or higher than the glass transition point and equal to or lower than the softening point of the resin film, and by patting or pressing with this heated pinholder-like jig (Japanese Laid-Open Patent Application No. 2001-76581); and a plastically deformed product which is plastically deformed by loading stress while heating a rubber or a resin material which has been preformed into a sheet-like form continuously by extrusion molding (Japanese Laid-Open Patent Application No. 2000-135744). However, both of them need a heating process and do not solve the problems mentioned above. Further, a method for manufacturing a weatherstrip comprising; the formation process of an insert formed from a band-like metal sheet, the extrusion molding process for forming a coated band-like body by co-extruding and coating rubber or resin with the use of the insert as a core material, and the plastic deformation process for forming a weatherstrip by plastically deforming the coated band-like body into a predetermined shape (Japanese Laid-Open Patent Application No. 1993-237904) is disclosed. This invention, however, is directed to the plastic deformation of the resin wherein the metal body is used as the core material, and does not relate to a product obtained by the so-called cold forming of a metal-free resin sheet only, or to a method for manufacturing such product.

GB 21, 821 discloses a metal stamping or forming apparatus, in which a plain or smooth cylindrical male former or die and an independent follower are employed in conjunction with a corrugated or notched female former. The follower is caused to descend, and acting as a punch with a cutting ring or die, severs the disc from a sheet of metal, leaving it lying lat upon the top surface of the female former or die. The follower is then caused to further descend until it holds the disc by its outer edges against the top surface of the female former or die, but not with sufficient pressure to prevent the edge of the disc (which is to form a corrugated flange) from sliding into the female former or die as forced into it by the descent of the male former, which latter immediately succeeds the arrival of the follower at its lower position.

JP 55-6023 discloses a square metal foil cap forming and capping device comprising: an unwinding and feeding mechanism with an unwinding pinch roll for unwinding a sheet-like metal foil packaging material wound on a reel and an intermittent feeding pinch roll for intermittently feeding the sheet-like metal foil packaging material which has been unwound; a punching-out and forming mechanism with a cap material punching-out means for punching out one or more cap materials from the fed sheet-like metal foil packaging material, and a cap forming means having a forming die and a former for forming a square cap material punched out by the cap material punching-out means; and a capping mechanism with a cap feeding means for feeding a formed cap and a fitting means for fitting the cap to a container body.

The object of the present invention is to provide a cap forming device capable of manufacturing a cap having a shape retaining property by processing a resin packaging material sheet, in particular, a cap forming device without a heating mechanism, a method for forming a resin cap having a shape retaining property, etc.

With the basic concept of using a conventional cap forming device without a heating mechanism for manufacturing aluminum caps, inotherwords, a cap forming device capable of cold forming, the present inventors have undertaken the development of a device for forming a polystyrene resin cap which has the following characteristics: having a shape retaining property; being excellent in hygiene and appearance; preventing leakage of filled contents; enabling the use of a metal detector to detect a metal foreign matter, and moreover, with an improved recycling efficiency being constituted of the same material as the container and being no need to separate it from the polystyrene container at the time of disposal; being excellent in peeling property when it is opened; and being able to prevent the spoilage or deterioration of the filled content of the container. As a result, the present inventors have found that it becomes possible to manufacture caps being excellent in shape retaining property and suitable for a practical use by providing a plurality of grooves on an inner circumferential surface of a forming die, which is a female die. The present inventors have also found that the slidability of the former is improved and thereby breakage of caps, etc. , at the time of forming can be prevented when the grooves on the inner circumferential surface of the forming die mentioned above are provided parallel to the setting-in direction of the former, which is a male die, or when a surface treatment, for example, withnickel-boron, is conducted to the inner circumferential surface of the forming die. In addition, the present inventors have found that a shape retaining property can be further improved by adjusting a gap between the forming die and the former not to exceed 4.0 times the thickness of a packaging material sheet. The present invention has been completed based on these findings mentioned above.

### Disclosure of the Invention

The present invention relates to: a resin cap forming device comprising a cap forming means having a forming die, a former, an operating rod for reciprocating former, and a cap pushing-back piston for forming a resincap material, wherein a plurality of grooves or projections is provided on an inner circumferential surface of the forming die, or a plurality of grooves or projections is provided on an outer circumferential surface of the former, parallel to the setting-in direction of the former for formation into a cap-like shape while a fold is guided to the skirt part of the cap, and wherein the grooves or projections comprise a circular arc cross-sectional shape ("1") ; the resin cap forming device according to "1", further comprising a cap material punching-out means for punching out one or more cap materials from a resin sheet-like packaging material ("2"); the resin cap forming device according to "1" or "2", wherein a plurality of grooves is provided on the inner circumferential surface of the forming die ("3") ; the resin cap forming device according to any one of "1" to "3", wherein the inner circumferential surface of the forming die is surface-treated ("4"); the resin cap forming device according to any one of "1" to "3", wherein the inner circumferential surface and a mouth of the forming die are surface-treated ("5"); the resin cap forming device according to "4" or "5", wherein the surface treatment is a nickel-boron treatment ("6") ; the resin cap forming device according to any one of "1" to "6", wherein a gap between the forming die and the former is adjusted not to exceed 4.0 times the thickness of the resin sheet-like packaging material ("7"); the resin cap forming device according to any one of "1" to "7", which is used when a resin cap is cold-formed from a resin sheet for cold forming ("8").

The present invention also relates to: a method for forming a resin cap, which is a method for forming a punched-out cap material into a cap-like shape comprising the steps of: punching out one or more cap materials from a resin sheet for cold forming: advancing and setting in the former in the forming die immediately after the cap material is punched out, while bringing the packaging material abutting a mouth of the forming die; and forming a skirt part of a cap in a gap between the former and the forming die; wherein forming into a cap-like shape is conducted while a fold is guided to the skirt part of the cap by plurality of grooves or projections provided on an inner circumferential surface of the forming die, or a plurality of grooves or projections provided on an outer circumferential surface of the former that are provided parallel to the setting-in direction of the former and comprise a circular arc cross-sectional shape ("9") ; the method for forming a resin cap according to "9", wherein the forming into a cap-like shape is conducted while a fold is guided to the skirt part of the cap by a plurality of grooves provided on the inner circumferential surface of the forming die ("10").

The present invention further relates to: a resin cap obtained by the method for forming according to "9" or "10", wherein the resin cap is consisting of a flat part, a folded part and a skirt part, and folds are guided into the skirt part ("11").
The present invention further relates to: a resin cap forming and capping device comprising: an unwinding and feeding mechanism with an unwinding pinch roll for unwinding a sheet-like packaging material wound on a reel and an intermittent feeding pinch roll for intermittently feeding the sheet-like packaging material which has been unwound; a punching-out and forming mechanism with a cap material punching-out means for punching out one or more cap materials from the fed sheet-like packaging material, and a cap forming means having a forming dies and a former for forming a cap material punched out by the cap material punching-out means, and a capping mechanism with a cap feeding means for feeding a formed cap and a fitting means for fitting the cap to a container body,
wherein the sheet-like packaging material is a resin sheet-like packaging material; and
wherein a plurality of grooves or projections is provided on the inner circumferential surface of the forming die, or a plurality of grooves or projections is provided on the outer circumferential surface of the former, in the cap forming means ("12").

### Brief Description of Drawings

Fig. 1 is a cross-sectional view of the cap forming device of the present invention.
Fig. 2 is a perspective view and a cross-sectional view of the cap obtained by the cap forming device of the present invention.
Fig. 3 is a perspective view of the forming die in the cap forming device of the present invention.
Fig. 4 is a schematic view of the cap forming and capping device of the present invention.
Fig. 5 is a cross-sectional view of the forming die used in Example 2.

### Best Mode of Carrying Out the Invention

The cap forming device comprises a cap forming means having a forming die and a former for forming a cap material, wherein a plurality of grooves or projections is provided on an inner circumferential surface of the forming die, and/or a plurality of grooves or projections is provided on an outer circumferential surface of the former. From the viewpoints of speeding up of the device, simplification of the structure, etc., it is preferably a cap forming device comprising a cap material punching-out means for punching out one or more cap materials from a sheet-like packaging material, and a cap forming means having a forming die and a former for forming a cap material punched out by the cap material punching-out means, wherein a plurality of grooves or projections is provided on an inner circumferential surface of the forming die, and/or a plurality of grooves or projections is provided on an outer circumferential surface of the former. A cap forming device wherein a plurality of grooves is provided on an inner circumferential surface of a forming die is more preferable because it can be manufactured easily and at a low processing cost from a conventional cap forming means having a forming die and a former. Hereinafter, the cap forming device of the present invention, which is a kind of device wherein a plurality of grooves is provided on the inner circumferential surface of the forming die, is mainly described with reference to appropriate drawings. In the figures, each numeral or letter represents as follows: 1, the cap forming device of the present invention; 2, movable blade; 3, fixed blade; 4, holding member for sheet-like packaging material; 41, spring; 42, flange part; 5, former; 6, operating rod for reciprocating former; 7, forming die; 71, inner circumferential surface of forming die; 72, mouth of forming die; 73, groove provided on inner circumferential surface of forming die; 8, cap pushing-back piston; 81, spring; 82, rod; 9, reel; 10, unwinding pinch roll; 11, intermittent feeding pinch roll; 12, punching-out and forming mechanism; 13, cap feeding means; 14, capping mechanism; M, sheet-like packaging material; B, container body; C, formed cap; C1, flat part of cap; C2, skirt part; C3, folded part of cap.

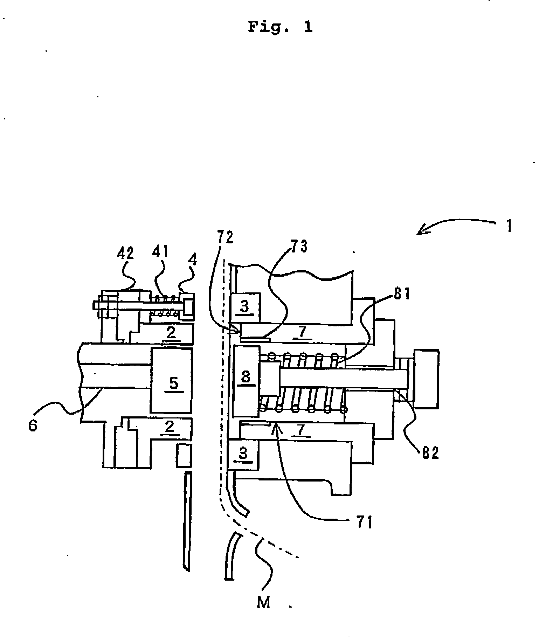

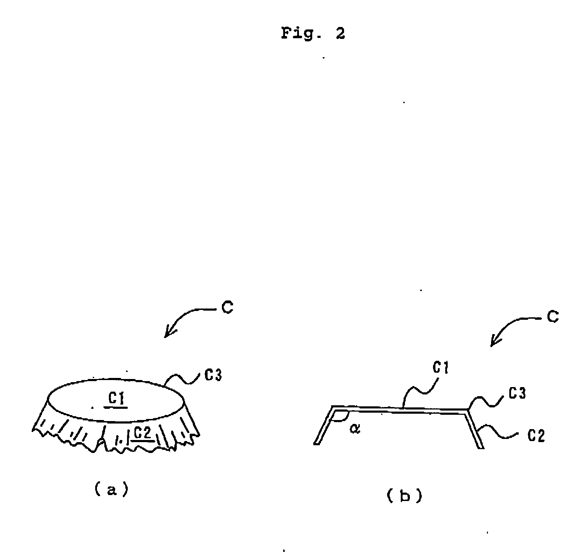

Fig. 1 shows a cross-sectional view of the cap forming device of the present invention, which comprises: a cap material punching-out means for punching out one or more cap materials from a sheet-like packaging material M, wherein a movable blade 2, a fixed blade 3 and a holding member for sheet-like packaging materials 4 are provided; a forming die 7 wherein a plurality of grooves 73 is provided on its inner circumferential surface 71; a cap pushing-back piston 8 provided in the forming die 7; and a cap forming means having a former 5 provided at the end portion of an operating rod for reciprocating former 6. When the sheet-like packaging material M is intermittently fed downward from up above and a part to be punched out reaches the point corresponding to the forming die 7, the movable blade 2 advances and one or more cap materials are punched out from the sheet-like packaging material M in cooperation with the fixed blade 3. At this point, the apical surface of the former 5 has advanced to contact the sheet-like packaging material M, and after punching out, it further advances to a prescribed position to push the cap pushing-back piston 8. As the former 5 advances, the cap pushing-back piston 8 goes back against the force of a spring 81. Consequently, a part of a cap material located outside the inner diameter of the forming die 7 (a part that forms a skirt part C2 of a cap C) is folded at a folded part C3, and slid while being held by being pinched between the inner circumferential surface 71 of the forming die 7 where the grooves 73 are provided and the outer circumferential surface of the former 5, and folds are guided to the skirt part C2 of the cap by plurality of grooves 73 provided on the inner circumferential surface 71 of the forming die 7, so that the cap C comprising a flat part C1 and the skirt part C2 (see Fig. 2) is formed. After the cap is formed, as the former 5 returns to its initial position, the piston 8 is advanced by repulsion of the spring 81 to push back the formed cap C. The pushed-back cap C is dropped onto the cap feeding means (chute) located below, and fed to the capping means. As described above, the cap forming device of the present invention is not equipped with a heating mechanism, and is capable of forming caps by causing plastic deformation to a resin sheet-like packaging material by cold forming.

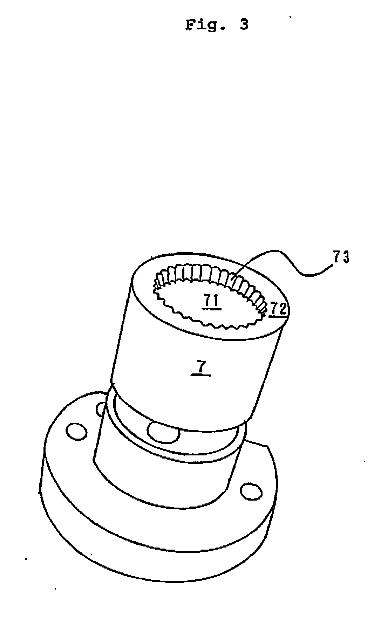

A feature of the cap forming device of the present invention is that: a plurality of grooves or projections is provided on the inner circumferential surface of the forming die, which constitutes a forming means, and/or a plurality of grooves or projections is provided on the outer circumferential surface of the former; preferably, a plurality of grooves is provided on the inner circumferential surface of the forming die (Fig. 3). A plurality of grooves and projections provided on the inner circumferential surface of the forming die means that grooves and projections are relative from the viewpoint that where the standard surface should be defined to be. Similarly, a plurality of grooves and projections provided on the outer circumferential surface of the former means that grooves and projections are relative. Further, from the viewpoint that a plurality of fold guiding parts with different spacings is provided in a gap between the inner circumferential surface of the forming die 7 and the outer circumferential surface of the former 5, a plurality of grooves and projections provided on the inner circumferential surface of the forming die and a plurality of grooves and projections provided on the outer circumferential surface of the former become grooves and projections relative, as well. In the case where projections are provided on the inner circumferential surface of the forming die or on the outer circumferential surface of the former, it is preferable to form the tip of the projection such that its cross-section shows a shape of a circular arc.

A punched-out cap material is folded between the outer circumferential part of the former 5 and the inner circumferential part of the forming die 7, and formed into a cap C comprising a flat part C1 and a skirt part C2. When a fold guiding part such as groove 73 is provided, stress is focused on a folded part C3 to cause plastic deformation, and so-called shape retaining property which is a property to maintain a folded and deformed shape is improved. In addition, the grooves and projections provided on the inner circumferential surface of the forming die and on the outer circumferential surface of the former are provided parallel to the setting-in direction (direction of advance and retreat) of the former from the viewpoint of slidability of the former 5. The shape of the grooves and the projections is not particularly limited, however, it is preferable that the cross-sectional shape of the grooves and the projections is a circular arc in order to guide the formation of folds at the skirt part C2 of the cap C smoothly, and to improve the shape retaining property of the cap C. In the case where the mouth of the container is in a circular shape, in particular, when grooves and projections whose cross-sectional shape is a circular arc are provided at equal spaces on the inner circumferential surface of the forming die or on the outer circumferential surface of the former, not only that the formation of folds is smoothly guided at the skirt part C2 of the cap C to improve the shape retaining property of the cap C, but also that the slidability of the former 5 and the appearance of the cap C is improved, and therefore, it is particularly preferable. Further, the width (size) and the length of the grooves and projections are not particularly limited, and can be appropriately set according to the size of the cap C, the thickness of the sheet-like packaging material M, a raw material of the sheet-like packaging material, etc.

Furthermore, by conducting a surface treatment of the inner circumferential surface 71 of the forming die 7, the slidability of the skirt part C2 of the cap material is improved and stress is easily focused on the folded part C3 to cause plastic deformation, and shape retaining property is improved, and moreover, it becomes possible to reduce breakage of caps which occurs during a punching-out and forming process. Examples of such surface treatment include hard chrome plating, nickel-boron plating, and Kanigen plating. Nickel-boron plating is preferable from the viewpoint that a surface treatment which reduces dynamic friction coefficient further improves the slidability of the skirt part C2 of the cap material. By conducting this surface treatment, not only the slidability of the skirt part C2 of the cap material but also the demolding (mold-releasing property) of the formed cap C from the forming die 7 can be improved. In addition, by conducting a surface treatment not only to the inner circumferential surface 71 of the forming die 7, but also to the mouth of the forming die 72, it is possible to prevent fine powders of resin, that are produced when the resin sheet-like packaging material M is punched out, from adhering to the forming die 7. Consequently, it is possible to prevent an increase of dynamic friction coefficient caused by adhered fine powders, and to prevent fine powders from being mixed in beverages, etc., in sealed containers and therefore, it is preferable also from a hygiene viewpoint.

The above-mentioned cap forming means is equipped with the forming die (female die) and the former (male die). As shown in Fig. 1, it is convenient to be equipped with the cap pushing-back piston having the spring 81 as a forming means because formed caps are demolded from the forming die automatically and are dropped onto the chute down below. For the sake of completeness, the need of the cap pushing-back piston 8 can be eliminated by providing a suction device for formed caps at the end portion of the forming die, on the side opposite to the former, or by transporting a sheet-like packaging material horizontally and inserting the former from up above until it goes beyond the end portion in the forming die. Further, with regard to the gap between the forming die 7 and the former 5 in a forming means with the forming die and the former thus described, its minimal gap is preferably adjusted not to exceed 4.0 times, particularly preferably, between 1.3 and 3.5 times the thickness of the sheet-like packaging material M. When the gap between the forming die 7 and the former 5 is adjusted not to exceed 4.0 times, the packaging material sheet M is plastically deformed, and resin caps having a shape retaining property can be produced more easily, and when the gap between the forming die 7 and the former 5 is adjusted to 1.3 times or more, particularly to 1.5 times or more the thickness of the packaging material M, there will be less possibility that the breakage of the packaging material sheet M occurs during a punching-out and forming process.

The above-mentioned cap material punching-out means in the present invention is not particularly limited as long as it is capable of punching out one or more cap materials from a sheet-like packaging material, and a punching-out means comprising a movable blade 2 provided on the position opposite to the forming die 7 and a fixed blade 3 provided adjacently to the outer circumferential part of the forming die 7 such that its surface is elevated is preferably exemplified. In addition, as shown in Fig. 1, when a holding member for sheet-like packaging materials 4 is attached to a flange part 42 via a spring 41 such that it surrounds the outer circumferential part of the movable blade 2, it is possible to prevent the sheet-like packaging material from moving at the time of punching out, and a punching-out process can be carried out stably.

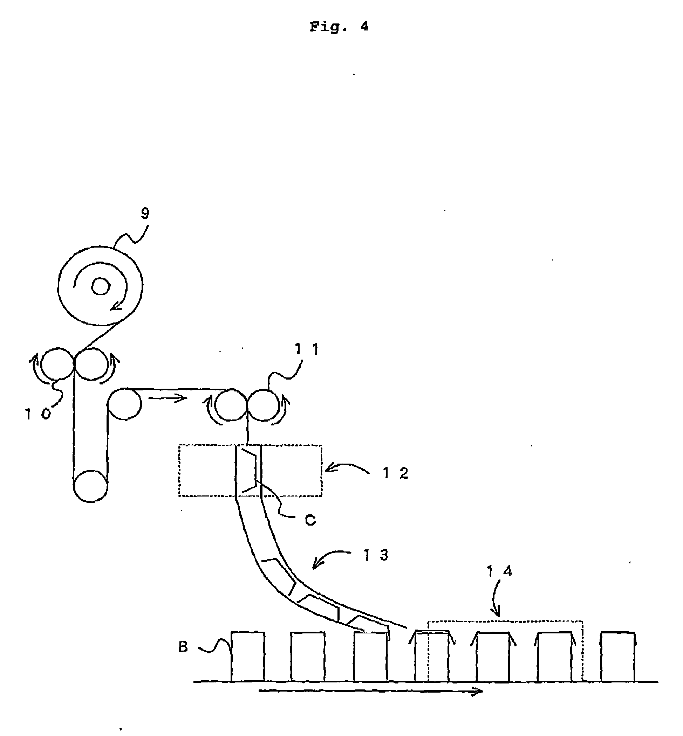

Further, the cap forming device 1 of the present invention can be used advantageously as a part of a cap forming and capping device. The cap forming and capping device of the present invention is not particularly limited as long as it is a device, as shown in Fig. 4, comprising: an unwinding and feeding mechanism with an unwinding pinch roll 10 for unwinding a sheet-like packaging material M wound on a reel 9 and an intermittent feeding pinch roll 11 for intermittently feeding the sheet-like packaging material which has been unwound; a punching-out and forming mechanism 12 with a cap material punching-out means for punching out one or more cap materials from the fed sheet-like packaging material, and a cap forming means having a forming die and a former for forming a cap material punched out by the cap material punching-out means, wherein a plurality of grooves or projections is provided on the inner circumferential surface of the forming die, and/or a plurality of grooves or projections is provided on the outer circumferential surface of the former; and a capping mechanism 14 with a cap feeding means 13 for feeding a formed cap C and a fitting means for fitting the cap C to a container body B, wherein the sheet-like packaging material is a resin sheet-like packaging material. As mentioned above, the cap forming and capping device can be constituted compactly because a heating mechanism is not provided in the punching-out and forming mechanism 12.

Next, the method for forming a resin cap of the present invention is not particularly limited as long as it is a method for forming a punched-out cap material into a cap-like shape while a fold is guided to the skirt part of the cap, comprising the steps of: punching out one or more cap materials from a resin sheet for cold forming; advancing and setting in the former in the forming die immediately after the cap material is punched out, while bringing the packaging material abutting the mouth of the forming die; and forming a skirt part of a cap in a gap between the former and the forming die ; wherein forming into a cap-like shape is conducted while a fold is guided to the skirt part of the cap by a plurality of grooves or projections provided on an inner circumferential surface of the forming die, or a plurality of grooves or projections provided on an outer circumferential surface of the former that are provided parallel to the setting-in direction of the former and comprise a circular arc cross-sectional shape. In general, the cap forming device of the present invention is used in the method for forming a resin cap of the present invention because the above-mentioned cap forming device of the present invention can be advantageously used particularly when resin caps are cold-formed from resin sheet for cold forming. With the use of a plurality of grooves or projections provided on the inner circumferential surface of the forming die, and/or a plurality of grooves or projections provided on the outer circumferential surface of the former, preferably, with the use of a plurality of grooves provided on the inner circumferential surface of the forming die, forming into a cap-like shape can be carried out while guiding a fold to the skirt part of the cap. Therefore, any resin cap which is obtained by using the above-mentioned method for forming of the present invention and the cap forming device of the present invention can be applied as the resin cap of the present invention. Hereinafter, the resin sheet for cold forming (see Japanese Patent Application No. 2002-222268), which is used in the method for forming a resin cap of the present invention and can be exemplified as a preferable example of a sheet-like packaging material in the cap forming device of the present invention, is described in detail.

The resin sheet for cold forming is not particularly limited as long as it is a resin sheet that is used to manufacture the resin cap of the present invention being fixed to a resin formed product (container body, etc.), and is made of a base material layer (single layer body) or a base material layer on which a functional layer is laminated (laminated body), and as long as it is a resin sheet for cold forming capable of giving a shape retaining property to the resin cap. It can be a single-layer structure made only of a base material layer, or a laminated structure wherein a functional layer is laminated on both surfaces or either one of the surfaces of the base material layer. Examples of the above-mentioned functional layer include; a sealant layer having an adhesive function, an antistatic layer having an antistatic function, a barrier layer having a gas penetration blocking function, a printing layer having a display function, and a protection layer having a protection function for the printing layer.

The base material layer of the resin sheet for cold forming is a layer having cold formability which makes it possible to form a secondary formed product having a shape retaining property by the plastic deformation caused by cold forming of the sheet. As for a material of the base material layer, there is no specific limitation and the base material include, for example, PS (polystyrene)-based resin such as PS resin, AS (styrene-acrylonitrile copolymer) resin, ABS (acrylonitrile-butadiene-styrene copolymer)-based resin, and AXS (terpolymer having acrylonitrile and styrene components) resin; PET-based resin such as unsaturated polyester resin and saturated polyester resin; polyethylene-based resin such as high-density polyethylene, low-density polyethylene, EVA (ethylene-vinyl acetate copolymer) resin, EVOH (ethylene-vinyl alcohol copolymer) resin; polypropylene-based resin; other polyolefin-based resin; polyacetal-based resin; and polycarbonate resin, are exemplified, or it can be a base material layer containing one or more kinds of these resins. Among them, the one containing PS-based resin, ABS-based resin or PET-based resin is preferable. It is especially preferable that it contains the same kind of resin as the resin formed product as a main component because it is possible to improve recycling efficiency. When the resin formed product contains a polystyrene-based resin, in particular, a high impact polystyrene-based resin as a main component, it is more preferable to contain the same kind of polystyrene-based resin or high impact polystyrene-based resin as a main component. Further, additives such as plasticizers, stabilizers, flame retardants, antioxidants, ultraviolet absorbers, colorants and antistatic agents, and subsidiary material additives such as reinforcing agents and filling agents can be added to these resins appropriately.

As for the above-mentioned polystyrene-based resin contained in the base material layer of the resin sheet for cold forming, so-called general-purpose polystyrene-based resin, rubber-modified polystyrene-based resin and the mixture thereof can be exemplified. The rubber-modified polystyrene-based resin is preferable among them, and the high impact polystyrene-based resin is preferable among the rubber-modified polystyrene-based resins, and especially the one wherein a styrene-butadiene copolymer is mixed and kneaded with the high impact polystyrene-based resin at a prescribed proportion, is more preferable.

The above-mentioned general-purpose polystyrene-based resin is also referred to as "GPPS", and is generally a styrene homopolymer, however, the resin used for a base material layer is not limited to a styrene homopolymer. As for a styrene-based monomer of the general-purpose polystyrene-based resin, styrene having one or more substituents such as alkyl groups and phenyl groups can be exemplified besides styrene. Specific examples of the styrene monomer include alkyl-substituted styrene such as α-methylstyrene, α-ethylstyrene, α-n-propylstyrene, α-isopropylstyrene, α-n-butylstyrene, α-t-butylstyrene, o-methylstyrene, m-methylstyrene, p-methylstyrene, o-ethylstyrene, m-ethylstyrene, p-ethylstyrene, o-isopropylstyrene, m-isopropylstyrene, p-isopropylstyrene, o-t-butylstyrene, m-t-butylstyrene, andp-t-butylstyrene. As for a polystyrene-based resin, it can be a homopolymer of these monomers or a copolymer of two or more kinds of them. With regard to the copolymer, it can be any copolymer such as a random copolymer, an alternating copolymer, a block copolymer, a graft copolymer, etc.

In addition, as for the above-mentioned rubber-modified polystyrene-based resin, anything can be used as long as it is so-called high impact polystyrene (HIPS) wherein synthetic rubber is blended with polystyrene. With regard to a blending method, it can be any blending method such as a method wherein rubber and polystyrene, both of which are polymers, are blended together mechanically or mixed together in the latex state, or a method wherein rubber is dissolved in a styrene monomer for polymerization, and a method wherein a styrene-based monomer is polymerized in the presence of a rubber-like polymer is preferable. The high impact polystyrene thus obtained from the method wherein a styrene-based monomer is polymerized in the presence of a rubber-like polymer is a graft copolymer wherein side chains of polystyrene are attached to rubber. The high impact polystyrene has a structure wherein soft component particles are present in a dispersed condition in polystyrene forming a matrix. As for a soft component particle, a particle having a structure generally referred to as "salami structure" or "single occlusion structure", which is a structure wherein polystyrene is occluded to the rubber-like polymer, ispreferable, but it is not limited thereto. Further, as for a styrene-based monomer, the same styrene-based monomer similar to the above-mentioned GPPS can be exemplified. Examples of the rubber-like polymer include polybutadiene, a styrene-butadiene copolymer and polyisoprene, and among them, a styrene-butadiene copolymer is especially preferable. As for the styrene-butadiene copolymer, SBR-based thermoplastic rubber can be exemplified, and the styrene-butadiene block copolymer having an SB or SBS structure, or SEBS wherein these are fully or partly hydrogenated, etc., can be used as well.

With regard to a rubber-modified polystyrene-based resin contained in the base material layer, the ones containing a composition consisting of only high impact polystyrene, or consisting of high impact polystyrene and a styrene-butadiene copolymer are preferable. Among them, the ones containing a composition consisting of 100 to 70% by weight of high impact polystyrene and 0 to 30% by weight of a styrene-butadiene copolymer are preferable, and in particular, the ones containing a composition consisting of 100 to 70% by weight of high impact polystyrene (hereinafter referred to as "high impact polystyrene (A)" that is obtained by polymerizing a styrene-based monomer in the presence of a rubber-like polymer, and has a matrix whose weight-average molecular weight is 150000 to 300000, a styrene content of 82 to 94% by weight, a rubber content of 6 to 15% by weight, and a liquid paraffin content of 0 to 3.0% by weight); and 0 to 30% by weight of a styrene-butadiene copolymer (hereinafter referred to as "styrene-butadiene copolymer (B)") that has a styrene content of 30 to 90% by weight, and a butadiene content of 70 to 10% by weight is preferable, because it makes possible to plastically deform the sheet by cold-forming the sheet, and the secondary formed product (resin cap) obtained by cold-forming the sheet will have an excellent impact resistance, and an excellent shape retaining property as well.

When the rubber content of above-mentioned high impact polystyrene (A) is 6% by weight or more, preferably 9% by weight or more, the sheet is not ruptured at the time of cold forming. When the rubber content is 15% by weight or less, it becomes easier to plastically deforming the sheet by cold forming, resulting that the obtained secondary formed product has a sufficient shape retaining property. Therefore, such rubber content is preferable. Further, the rubber content of high impact polystyrene can be calculated by a calculating method based on the amount of rubber used at the time of manufacture, or a method for evaluating an analytical curve prepared by infrared absorption spectrometry (IR) method with the use of high impact polystyrene containing a known rubber content as a standard sample.

Furthermore, when a liquid paraffin content of the above-mentioned high impact polystyrene (A) is 3.0% by weight or less, preferably 2.0% by weight or less, it becomes easier to plastically deforming the sheet by cold forming, resulting that the obtained secondary formed product has a sufficient shape retaining property. Therefore, such liquid paraffin content is preferable. As for the liquid paraffin, cycloparaffin such as cyclopentane, cyclohexane, cycloheptane, etc., can be specifically exemplified, and white mineral oil which can be used for food packaging materials (mineral oil being a mixture of alkyl naphthene hydrocarbon and having a weight-average molecular weight of about 300 to 600) is preferably exemplified.

Among the above-mentioned high impact polystyrenes (A), the one having a matrix whose weight-average molecular weight is in the range of 150000 to 300000, especially 200000 to 250000 is preferable. When the matrix whose weight-average molecular weight is 150000 or more, the secondary formed product obtained by cold forming becomes a resin cap having more appropriate strength. When the matrix whose weight-average molecular weight is 300000 or less, it becomes easier to plastically deforming the sheet by cold forming, resulting that the obtained secondary formed product has a sufficient shape retaining property. Therefore, such weight-average molecular weight is preferable. A molecular weight of the matrix of the high impact polystyrene (A) mentioned above can be measured by the following method. In brief, it is a method comprising the steps of: dissolving 1 g of high impact polystyrene in 30 ml of methyl ethyl ketone/methanol mixed solvent (volume ratio : 20/3); then, separating a matrix part and soft component particles which are insoluble components by centrifugation; collecting the supernatant other than the insoluble components by decantation; pouring the collected supernatant gradually into about 500 ml of methanol while stirring to precipitate a polymeric part; separating the polymeric part by filtration, then removing methanol by drying; dissolving the obtained dry sample in tetrahydrofuran such that the concentration is adjusted to be 2 mg/ml, and the molecular weight of the matrix in the dissolution is measured with gel permeation chromatography (GPC). The GPC used is equipped with a differential refractometer (RI detector) as a detector, and the molecular weight can be calculated based on the analytical curve obtained by using commercially available monodisperse polystyrene.

Further, among the above-mentioned high impact polystyrenes (A), the ones wherein the swelling degree of soft component particles contained therein is 30 or less are preferable. When the swelling degree of the soft component particles is 30 or less, it becomes easier to plastically deforming the sheet by cold forming, resulting that the obtained secondary formed product has a sufficient shape retaining property. The above-mentioned swelling degree can be measured by the following method. In brief, it is the method comprising the steps of: dissolving 0.4 g of high impact polystyrene in 18 ml of toluene and leaving for 2 hours or more. The obtained toluene solution is centrifuged (4500 rpm x 2 hours) to separate an insoluble matter. The supernatant is discarded, the insoluble matter is weighed, and the weight is represented as "a". Next, the insoluble matter is dried in a vacuum dryer, and the weight after drying is represented as "b". The swelling degree can be calculated from "a/b".

Furthermore, among the above-mentioned high impact polystyrenes (A), the ones wherein the average particle diameter of soft component particles contained therein is 0.5 to 10 µm, especially 1 to 5 µm, are preferable. When the average particle diameter of soft component particles contained therein is 0.5 µm or more, preferably 1 µm or more, the sheet is not ruptured at the time of cold forming. When it is 10 µm or less, preferably 5 µm or less, it becomes easier to plastically deforming the sheet by cold forming, resulting that the obtained secondary formed product has a sufficient shape retaining property. The average particle diameter of the above mentioned soft component particles can be measured by the following method. In brief, it is a method comprising the steps of: dissolving high impact polystyrene in methyl ethyl ketone such that the concentration is adjusted to about 1%; with a laser diffraction particle size analyzer (SALD-1100; Shimadzu Corporation), exposing this sample solution to the laser beam to detect an image of generated diffraction ray and scattered ray; then the size and the amount of particles are calculated based on the pattern and the intensity of the image. For the average particle diameter, it is possible to use 50% of particle diameter in cumulative volume distribution.

On the other hand, among the above-mentioned styrene-butadiene copolymers (B), the ones whose styrene content is 30 to 90% by weight, and whose butadiene content is 10 to 70% by weight are preferable from the viewpoint that it is possible to add more excellent shape retaining property and impact resistance.

If necessary, various additives, for example, additives such as antioxidants, plasticizers, heat stabilizers, ultraviolet absorbers, light stabilizers, lubricants, mold-releasing agents, flame retardants, flame retardant aids, pigments, dyes, carbon black, and antistatic agents can be blended with the base material layer in the resin sheet used in the present invention, or organic fine particles or inorganic fine particles can be added insofar in an amount they do not impair the performance of the base material layer. In addition, the thickness of the base material layer in the resin sheet is not particularly limited, and, for example, in case of polystyrene-based resin sheet used for manufacturing the resin cap of the present invention which needs to be peeled from the resin formed product such as a container with an opening, it is preferable that the thickness is in the range of 50 µm to 1 mm.

The functional layer laminated on either one of the surfaces or both surfaces of the base material layer in the resin sheet used in the present invention is provided to give various functions which improve adhesiveness, antistatic property, wear resistance, aesthetic property, weather resistance, gas barrier property, etc. Examples of such functional layer include a sealant layer, an antistatic layer, a printing layer, and a barrier layer. The functional layer can be constituted of multiple layers having respective functions, or of one layer having plural functions. As for a resin sheet comprising these functional layers, the followings can be exemplified: the one wherein the sealant layer is laminated on both surfaces or either one of the surfaces of the base material layer; the one wherein the sealant layer and the antistatic layer are laminated on both of the surfaces of the base material layer, respectively; the one wherein the sealant layer is laminated on one surface of the base material layer, and the printing layer and the antistatic layer are sequentially laminated on the other surface of the base material layer; and in addition, the one wherein the barrier layer is laminated between the sealant layer and the base material layer. Moreover, if necessary, additives such as antioxidants, heat stabilizers, ultraviolet absorbers, light stabilizers, flame retardants, mineral oils, external lubricants can be blended with these functional layers appropriately, or organic fine particles or inorganic fine particles can be added in an amount they do not impair the performance.

Examples of a method for manufacturing the functional layers such as the sealant layer and the antistatic layer mentioned above include: a method wherein a coating solution containing components appropriate for the respective functions, for example, adhesive components, antistatic agents, etc., is coated on either one of the surfaces or both surfaces of the base material layer, and then dried; and a method wherein a film is manufactured by kneading these components into a raw material of resin, and then laminated. As for a method for coating, methods such as roll coater, knife coater, gravure and knife coater and spraying can be adopted. The surface of the base material layer may be reformed in advance by methods such as a corona discharge treatment method, an ozone treatment method, and a plasma treatment method. Further, as for a functional film for laminating, the ones containing the same kind of resin as the base material layer are preferable. For example, when the base material layer contains the above-mentioned polystyrene-based resin, the one containing GPPS and/or a styrene-butadiene copolymer is preferable.

The sealant layer as the functional layer mentioned above is laminated on both surfaces or either one of the surfaces of the base material layer directly or indirectly in order to adjust the adhesive strength between the resin cap of the present invention formed from a resin sheet and the resin formed product (container body, etc.). When it is necessary to adjust the adhesive strength, for example, when it is necessary to peel the resin cap of the present invention from the resin formed product by fingers, it is preferable to provide the sealant layer. However, when it is not necessary to adjust the adhesive strength, for example, when high adhesive strength is preferable because the resin formedproduct and the resin cap of the present invention are manufactured from the same kind of resin, there is no particular need to provide the sealant layer. The components and the thickness of the sealant layer can be selected appropriately according to the components of the resin cap of the present invention and the resin formed product that are fixed via the sealant layer, and a fixing method thereof (for example, physical heat sealing and chemical adhesion). Examples of an adhesive component in chemical adhesion include: starch; glue; dextrin; vinyl-based polymers such as vinyl acetate resins, vinyl chloride resins and acrylic resins; rubber such as natural rubber, chloroprene rubber and butyl rubber; amino resins; epoxy resins; phenol resins; unsaturated polyester; polyurethane; and polyimide. However, physical heat sealing with the sealant film for laminating, which does not need the adjustment of the fixing part, is more preferable than the chemical adhesion with the sealant layer formed by coating the adhesive component. In addition, it is preferable that the thickness of the sealant layer is generally in the range of 10 to 50 µm.

As for a sealant layer used in the case where the sealant film for laminating is used for adhesion, for example, in the case where the resin formed product and the resin cap of the present invention containing a polystyrene-based resin as a main component are ultrasonically welded, a sealant film wherein the same kind of resin as the base material layer is contained as a main component can be preferably exemplified. By blending other thermoplastic resins with a polystyrene-based resin of the same kind as the resin formed product or the base material layer, the peel strength can be controlled according to its blended amount. Further, a sealant film mainly constituted of a material which is excellent in adhesiveness, such as a thermoplastic elastomer and an ethylene-based copolymer, can be preferably exemplified. Examples of the above-mentioned ethylene-based copolymer include ethylene-vinyl acetate copolymers and ethylene-unsaturated carboxylic acid ester copolymers. If necessary, various additive components, for example, additives such as antioxidants, heat stabilizers, ultraviolet absorbers, light stabilizers, lubricants, flame retardants, flame retardant aids, antistatic agents, pigments, carbon black, mineral oils, and external lubricants can be blended with the sealant layer. In addition, organic fine particles or inorganic fine particles can be added as well in an amount they do not impair the sealing function.

The adhesive strength between the sealant layer and the base material layer is preferably 3 N/15 mm in width or more, particularly preferably 5 to 8 N/15 mm in width. In the case where the adhesive strength between the sealant layer and the base material layer is 3 N/15 mm in width or more, when the resin cap of the present invention fixed to the resin formed product is peeled off by fingers, the occurrence of delamination between the sealant layer and the base material layer can be reduced, and it is possible to prevent a splinter of the sealant layer, which is peeled in the resin formed product and the cap and caused by delamination between the base material layer and the sealant layer, from adhering to the resin formed product and remaining there. When the adhesive strength is 5 to 8 N/15 mm in width or more, more remarkable effect can be obtained. The adhesive strength can be measured by the following method which conforms to JIS-K6854. In brief, it is a method comprising the steps of: pinching unadhered parts of the base material layer and the sealant layer with chucks respectively with the use of a tensile strength tester; setting the opening of both layers at 180°; pulling unadhered parts at a pulling speed of 300 mm/min; measuring the load at that time; and the adhesive strength can be calculated by converting the measured load into the load per 15 mm in width of adhesion. Further, when a better peeling property between the resin formed product and the resin cap is required, it is preferable to make the flexibility of the functional layer larger than that of the base material layer, and to make the hardness of the functional layer smaller than that of the base material layer in order to obtain a comfortable peeling property.

The antistatic layer as the functional layer mentioned above is provided in order to make it possible to continuously forming the resin cap of the present invention from the resin sheet by reducing frictional electrification. The antistatic layer is laminated usually on the surface opposite to the laminated surface of the sealant layer, directly or indirectly on the base material layer. The sheet comprising the functional layer can prevent situations wherein the resin cap of the present invention cannot be transported because of difficulties in taking out/feeding of the resin cap of the present invention caused as follows: when continuous cold forming is carried out, there occurs friction between the sheet and the die in the die part and the resin cap of the present invention is significantly electrostatically charged; as a result, the obtained resin cap adheres to the die without being demolded, and thereby the sheet to be fed next, etc., and the resin cap are overlapped, or the resin cap adheres by electrostatic charging to a peripheral part of the die or a chute part, or the resin cap immediately after forming drifts in the air, etc.. Such electrostatic charge of the resin cap can be avoided by improving the electroconductivity of the sheet surface and/or improving the sliding property of the sheet surface. As for the improvement of the electroconductivity, it is preferable to adjust the surface resistivity value of the sheet surface measured in conformity to JIS-K6911 to be in the range of 10⁶ to 10¹⁴ Ω. In addition, as for the improvement of the sliding property, it is preferable to adjust the coefficient of static friction of the sheet surface measured in conformity to JIS-K7125 to be in the range of 0.1 to 0.4.

A resin sheet wherein the surface resistivity value of the sheet surface is in the range of 10⁶ to 10¹⁴ Ω can be manufactured, for example, by coating the sheet surface with surfactants such as antistatic agents and anti-fogging agents, or with electroconductive substances such as hydrophilic macromolecules, as the antistatic layer, or the sheet can be manufactured by kneading antistatic agents or anti-fogging agents into the resin before the resin is formed into a sheet. For example, in case of a polystyrene-based resin sheet, when the antistatic layer is formed by coating the surface of the base material layer of the polystyrene-based resin with the electroconductive substance, etc., coating amount is preferably in the range of 20 to 500 mg/m². When the surface resistivity value of a polystyrene-based resin sheet is larger than 10¹⁴ Ω, there occurs significant frictional electrification at the time of continuous forming as mentioned above, and it may become difficult to take out/feed the resin cap because it adheres to the die part. In addition, a resin sheet wherein the coefficient of static friction of the sheet surface is in the range of 0.1 to 0.4 can be manufactured, for example, by coating the sheet surface with surface lubricants such as a polysiloxane resin, as the functional layer, or the sheet can be manufactured by kneading surface lubricants, etc., into the resin before the resin is formed into a sheet. When manufacturing the functional layer, the polysiloxane resin can be used in either form of oil or water-based emulsion. When coating, the coating amount is preferably in the range of 0.1 to 50 mg/m². As mentioned above, by kneading the antistatic agents or surface lubricants, etc. , directly into the material resin of the base material layer, it becomes possible for the base material layer to substitute for the antistatic layer with an antistatic effect having a prescribed surface resistivity value and a coefficient of static friction.

The printing layer as the above-mentioned functional layer is provided for the purpose of a product description and surface decoration of the resin cap of the present invention. It can be provided either on the surface of the base material layer, or between the base material layer and such other functional layer laminated on the base material layer. However, when there is other functional layer on both surfaces or either one of the surfaces of the base material layer, it is preferable that the printing layer is provided between the base material layer and such other functional layer in order to avoid omission and damage of the printing surface caused by the friction between the sheet and the die, etc., at the time of cold forming. Examples of a method for forming a printing layer include: a method for forming a printing layer by printing on the surface of the base material layer; a method for forming a printing layer by laminating other functional layer on the printing surface prepared on the surface of the base material layer; a method for forming a printing layer by printing on the backside of the other functional layer manufactured as a film so that it can be used also as the printing layer, and by laminating this film, which acts as the printing layer as well, in such a manner that the printing surface comes into contact with the base material layer; a method for forming a printing layer by using the film on which printing is performed separately as the printing layer, and by laminating this film between the base material layer and other functional layer. Further, the printing layer can be decorated with metallic luster.

The barrier layer as the above-mentioned functional layer is provided in order to add weather resistance, gas barrier property, etc. , against light, gas, etc., to the sheet. In the case where the products formed from the sheet are containers, caps of containers, packaging materials, etc., the barrier layer is provided in order to add an aroma retaining function and a function to prevent permeation of water vapor and poisonous gas, so that spoilage of the content can be prevented. The barrier layer is generally manufactured as a gas impermeable film, and when other functional layers are provided on the surface of the base material layer, or provided on both surfaces or either one of the surfaces of the base material layer, it is provided between the other functional layer and the base material layer, for example, between the sealant layer and the base material layer. As for the above-mentioned gas impermeable film, a resin film manufactured from a resin containing a resin component which constitutes the base material layer is preferable. The film may, if necessary, contain an ultraviolet absorber, etc. The thickness of the gas impermeable film that forms the barrier layer is generally in the range of 10 to 100 µm.

As mentioned above, a cold forming process accompanied with the plastic deformation such as forming, bending, shearing and pressing is carried out to the resin sheet for cold forming by pushing the sheet material into the female die by using the male die without heating, generally at room temperature, and pressing the sheet material at high speed. As for a technique to evaluate the plastic deformation of the sheet at this point of time as a model, the high speed impact test at room temperature is considered to be effective. From this point of view, it is preferable that the propagation energy and the displacement at maximum load of the resin sheet for cold forming, which are measured by the falling weight impact test method conforming to ASTM-D3763, have specific values.

For example, in the case where the resin sheet for cold forming contains a polystyrene-based resin, it is preferable that the propagation energy of the sheet which is 150 µm thick, measured by the falling weight impact test method conforming to ASTM-D3763, is 0.015 J or more, particularly 0.02 J or more. When the propagation energy is 0.015 J or more, the sheet material is plastically deformed sufficiently without rupture, and the obtained resin caps of the present invention are uniformly shaped with a shape retaining property. When the energy is 0.02 J or more, more remarkable effect can be obtained. The propagation energy of the falling weight impact test described herein refers to the absorbed energy between the displacement at maximum load and the displacement at the rupture in the total absorbed energy needed for the break obtained at the falling weight impact test. In addition, a value obtained by the falling weight impact refers to a value measured with the use of a weight having a holder of 45 mm in diameter and an impact core of 13 mm in diameter, at the rate of fall of the impact core of 5.0 M/sec.

Similarly, in the case where the resin sheet for cold forming contains a polystyrene-based resin, it is preferable that the displacement at maximum load of the sheet which is 150 µm thick, measured by the falling weight impact test method conforming to ASTM-D3763, is 10.0 mm or less, particularly 9.5 mm or less. When the displacement at maximum load is 10.0 mm or less, the sheet material is plastically deformed sufficiently without rupture, and the obtained resin caps of the present invention are uniformly shaped with a shape retaining property. When the displacement at maximum load is 9.5 mm or less, more remarkable effect can be obtained. The displacement at maximum load in the falling weight impact test described herein refers to the amount of displacement (the amount of displacement between the tip of falling weight and the surface of a test piece of the sheet) at the time of maximum loading. In addition, a value obtained by the falling weight impact refers to a value measured with the use of a weight having a holder of 45 mm in diameter and an impact core of 13 mm in diameter, at the rate of fall of the impact core of 5.0 M/sec.

The resin sheet for cold forming used in the present invention can be colored, for instance, white-colored. In particular, when the sheet contains a polystyrene-based resin, it is preferable that either one of the base material layer or the functional layer, or both of them are white-colored. When the sheet containing a polystyrene-based resin is formed and processed, a bended part wherein plastic deformation has occurred is whitened. Consequently, when these layers themselves have been white-colored in advance, the whitening of the bended part caused by plastic deformation would be less noticeable. For the white-coloring of these layers, the sheet can be manufactured by adding white pigments and dyes, such as titanium oxide and zinc oxide, to a raw resin in the range of 0.5 to 8% by weight.

The resin sheet for cold forming used in the present invention can be manufactured by known methods using a sheet extruding device, a press processing device, etc. The sheet can be manufactured as a single base material layer, or a laminated body of the base material layer and one or more functional layers, for example, by a method wherein the base material layer and the functional layer are co-extruded simultaneously by using the sheet extruding device; a method wherein the base material layer and the functional layer are dry-laminated by using a two-component reactive adhesive; a method wherein the base material layer and the functional layer are laminated by thermal lamination; a method wherein the functional layer is extrusion-coated on the base material layer; a method wherein the printing is performed on the base material layer or the functional layer; or by an appropriate combination of these methods.

The resin sheet for cold forming has been explained in detail. The thickness of the resin sheet for cold forming differs depending on the kinds and shapes of the resin cap of the present invention, and is not particularly limited. Usually, the ones whose thickness is 0.2 mm or less, which are recognized as a film, and the ones whose thickness is 1 mm or more, which are recognized as a thin plate, are also included in the resin sheet for cold forming. When the resin sheet for cold forming is a sheet containing a polystyrene-based resin, it is preferable that the thickness of the sheet is in the range of 50 µm to 1 mm, in particular, in the range of 80 µm to 300 µm. When the thickness of the sheet is 50 µm or more, the resin cap of the present invention, the one with strength, can be manufactured from the polystyrene-based resin sheet. When the thickness is 80 µm or more, more remarkable effect can be obtained. When the thickness of the sheet is 1 mm or less, the sheet material is plastically deformed at the time of cold forming and the resin cap having a shape retaining property can be obtained. When the thickness is 300 µm or less, more remarkable effect can be obtained.

The resin sheet for cold forming is applied to so-called press forming method wherein the resin packaging material sheet is plastically deformed and pulled into shape by sandwiching the packaging material sheet between a pair of a former (male die) and a forming die (female die), pushing the sheet into the forming die by using the former and pressing the sheet at high speed. Plastic deformation is a deformation which occurs when loaded stress exceeds elastic limit of a material. Deformation becomes significant by loading stress equal to the yield point or higher on the material, and the resin cap having a shape retaining property can be obtained. Molding pressure is not particularly limited, and can be selected appropriately according to the kind of the resin sheet, the shape of the resin cap, etc. As mentioned above, high speed pressing is generally performed at room temperature or ordinary temperature without heating, but in some cases, it can be performed under low temperature heating, at a temperature lower than a glass transition point (Tg) of the resin that substantively constitutes the resin sheet. For example, when the resin sheet is a polystyrene-based resin sheet, high speed pressing can be performed at a temperature lower than 80°C, preferably in the temperature range of 10 to 60° C, and also at ordinary temperature or room temperature.

Further, with regard to the container body (resin formed product) to which the resin cap of the present invention is fixed, there is no limitation as to its material, shape, form, etc. Though any material can be used as the material of the resin formed product, it is preferable to use the same kind of resin as the resin cap of the present invention, and the one containing , for example, PS (polystyrene)-based resin such as PS resin, AS (styrene-acrylonitrile-copolymer) resin, ABS (acrylonitrile-butadiene-styrene copolymer)-based resin, and AXS (terpolymer having acrylonitrile and styrene components) resin; PET-based resin such as unsaturated polyester resin and saturated polyester resin; polyethylene-based resin such as high-density polyethylene, low-density polyethylene, EVA (ethylene-vinyl acetate copolymer) resin, EVOH (ethylene-vinyl alcohol copolymer) resin; polypropylene-based resin; other polyolefin-based resin; polyacetal-based resin; and polycarbonate resin are exemplified, or it can be a material containing one or more kinds of these resins. Among them, the ones containing PS-based resin, ABS-based resin and PET-based resin are particularly preferable. Further, additives such as plasticizers, stabilizers, flame retardants, antioxidants, ultraviolet absorbers, colorants, antistatic agents, and subsidiary material additives such as reinforcing agents and filling agents can be appropriately added to these resins. As for a shape/form of the resin formed product which contains such resin, any shape/form including film, sheet, plate, bar, pipe, laminated body, fabric, net, nonwoven, various containers, packaging material, parts of various equipments can be used. As for a method for forming the product, any method including compression molding, transfer molding, laminate molding, injection molding, extrusion molding, blow molding, calendering, and cast forming can be used.

As for a method for fixing the resin cap of the present invention to the above-mentioned resin formed product, any method including adhesion and welding (fusion welding) can be used. Examples of welding methods include hot plate welding, hot-air welding, impulse welding, and ultrasonic welding. Among them, ultrasonic welding is preferable from the viewpoint that welding can be conducted with an elevated degree of uniformity and at a higher speed. For example, ultrasonic welding of the open resin container and the cap manufactured from the resin sheet having the sealant layer can be conducted with the use of an ultrasonic welding machine of specific specification used for the specific purpose, in addition to a common ultrasonic welding machine, by emitting ultrasonic wave whose frequency is 15 to 50 kHz, preferably 20 to 40 kHz, and whose amplitude is 16 to 126 µmpp, preferably 40 to 80 µmpp toward the adhesion face. As for a condition of the ultrasonic welding, for example, in the case where a cold-formed cap is sealed to an opening of a polystyrene-based resin container and thus a sealed container is made, it is preferable that the frequency is 20 to 40 kHz, the output is 50 to 100 w/piece, the irradiation time is 0.2 to 1 second, etc. The cap of the resin container such as a beverage container welded under the condition thus described can be peeled by fingers, and at the same time, peel strength which prevents the cap from peeling off even if the sealed container is dropped inadvertently can be obtained. Further, an example of an adhesion method includes a method comprising the following steps: by applying various adhesives to the predetermined surface of the resin cap of the present invention or the resin formed product, or by providing the sealant layer containing constituents of the adhesives on the resin sheet for cold forming, the sealant layer capable of obtaining fixing strength, for example, to the extent that the resin cap can be peeled from the resin formed product by fingers, is prepared; and then pressure application and deposition are appropriately carried out while adjusting the fixing strength.

As for the fixing strength between the resin formed product and the resin cap of the present invention, the peel strength is preferably in the range of 6 to 20 N/15 mm in width in a 180° peel test according to JIS-K6854, and more preferably in the range of 8 to 15 N/15 mm in width. The peel strength is a value measured as follows: a sheet manufactured from a resin material having the same kind of composition as the resin formed product and the resin sheet for cold forming are welded, for example, by the ultrasonic welding method, and the peel strength (180° peeling) is measured while setting the opening of both sheets at 180°. When the peel strength is 6 N/15 mm in width or more, in the case where the resin formed product is a beverage container, even if the container is dropped with the contents filled, the cap is not peeled, so the leakage of the content is prevented. When the peel strength is 20 N/15 mm in width or less, there is no difficulty in peeling the cap by hand. When the peel strength is in the range of 8 to 15 N/15 mm in width, it is more preferable as the above-mentioned effect can be more surely obtained.

The resin cap of the present invention basically has the form and physical property possessed by the resin sheet for cold forming. In other words, it can be constituted only of the base material layer as a single-layer structure, or it can be the one having the functional layer laminated on both surfaces or either one of the surfaces of the base material layer. Examples of the functional layer include a sealant layer having an adhesive function, an antistatic layer having an antistatic function, and other layers including a printing layer and a barrier layer. As for the above-mentioned base material layer, the one containing a composition consisting of 100 to 70% by weight of high impact polystyrene (A) and 0 to 30% by weight of styrene-butadiene copolymer (B) is preferable, and further it is preferable that the high impact polystyrene (A) has soft component particles that have a swelling degree of 30 or less and an average particle diameter in the range of 0.5 to 10 µm because the cap having an excellent shape retaining property can be obtained. Furthermore, the sealant layer, the antistatic layer, the printing layer, the barrier layer, etc., laminated as the above-mentioned functional layer have the same functions and constitutions as these functional layers in the resin sheet for cold forming.

As a specific example comprising the resin cap of the present invention, a sealed container can be exemplified, and as for the sealed container, it is preferable that the cap and the resin container contain the same kind of resin as a main component from the viewpoint of the improvement of recycling efficiency. In particular, the one wherein both the cap and the resin container contain a polystyrene-based resin as a main component is preferable because it is excellent in tensile strength, heat resistance, light resistance, formability and surface luster. Further the one manufactured with the resin sheet containing the high impact polystyrene as a main component is preferable because it does not get damaged even if the container is dropped inadvertently, and has an excellent impact resistance. Furthermore, if the peel strength between the cap and the open resin container is arranged by the ultrasonic welding method, etc., to be in the range corresponding to 6 to 20 N/15 mm in width of 180° peel test, it is possible to drink the contents of the resin container without generating peeling between the cap and the resin container when a straw is stuck into the cap.

As for the sealed container, a liquid filled container, a beverage filled container, or a food filled container is preferable. The beverage filled container such as a container for lactic acid bacteria beverage and a food filled container such as a dairy product container are particularly preferable because of the following reasons: heating process is not necessary in a device for filling liquid: downsize of the device can be conducted; and even when troubles arise, there is no need to discard the resin sheets of the cap material.

The present invention will be described more specifically with reference to Examples, but the technical scope of the present invention is not limited to these exemplifications.

### Example 1 [Manufacture of sheet-like packaging material]

By conducting melt extrusion of high impact polystyrene having weight-average molecular weight of 230000, a rubber content of 12% by weight, a liquid paraffin content of 1.0% by weight, a swelling degree of soft constituent particles of 12 and an average particle diameter of the soft constituent particles of 3.4 µm, the base material layer (sheet) was obtained. As extruding machine, T-Die extruding machine of 65 mm in diameter of was used. Next, 30 µm sealant film (ZH-41; J-Film Corporation) was laminated on one surface by dry lamination method, and to prepare the sealant layer. The peel strength between the polystyrene-based resin sheet and the sealant film was 4 N/15 mm in width. An aqueous solution of a surfactant (Electrostripper AC; Kao Corporation) diluted in the concentration of 30 % was coated by using a roll coater on the surface of the base material layer on the side opposite to the surface on which the sealant layer 2 was laminated and the antistatic layer 3 was prepared. The sheet-like packaging material with a thickness of 200 µm and having a three-layer structure was thus manufactured.

### Example 2 [Manufacture of resin cap]

With the use of the sheet-like packaging material manufactured in Example 1, and with the use of a cold forming device shown in Fig. 1 for the cap forming device, continuous forming (13,000 shots per hour) was carried out under the atmosphere of 23° C to manufacture the cap C under the conditions shown in (1) to (4) mentioned below. With regard to the shape of the cap C, the diameter of the flat part Cl was made to be 24.5 mm and the length of the skirt part C2 was made to be 5 mm.

### (1) Shape of the grooves on the inner circumferential surface of the forming die

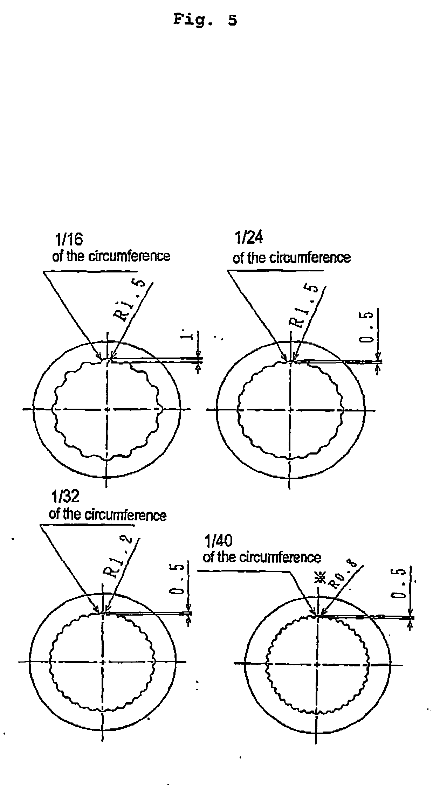

The sizes of the grooves on the inner circumferential surface of the forming die were arranged to be 1/16, 1/24, 1/32 and 1/40 of the circumference, and each of forming dies was attached to the cap forming device mentioned above to manufacture caps. The cross-sectional shapes of the forming dies used in this test are shown in Fig. 5. As to grooves whose sizes were 1/16, 1/24, 1/32 and 1/40 of the circumference, groove depths D were 1.0 mm, 0.5 mm, 0.5 mm, and 0.5 mm, respectively, and groove radii R were 1. 5 mm, 1.5 mm, 1.2 mm and 0.8 mm, respectively.

### (2) Angle of the grooves on the inner circumferential surface of the forming die

The angles of the grooves on the inner circumferential surface of the forming die were arranged to be 0° (parallel to the setting-in direction of the former), 15° (inclined at 15° toward the setting-in direction of the former), and each of forming dies was attached to the cap forming device mentioned above to manufacture caps.

### (3) Surface treatment of the inner circumferential surface of the forming die

The forming die whose inner circumferential surface had been treated with hard chrome plating or nickel-boron was attached to the cap forming device mentioned above to manufacture caps.

### (4) Gap between the forming die and the former

The forming die of 26 mm in diameter and the former of 24.5 mm in diameter, or the forming die of 25 mm in diameter and the former of 24.5 mm in diameter were attached to the cap forming device mentioned above to manufacture caps.

### Example 3 [Characteristic test]

### (1) Shape retaining property

With regard to the cap manufactured in Example 2, the angle α formed between the flat part C1 and the skirt part C2 (see Fig. 2-b) was measured 2 hours after the formation of the cap. It was evaluated that the cap has a shape retaining property when the skirt part C2, folded vertically (α = 90°) to the flat part C1, shows α ≤ 130° to the flat part C1. The results are shown in Table 1. In the table, each symbol represents as follows. ○: α ≤ 130°, Δ : 130° < α ≤ 150°, ×: 150°≤ α.

### (2) Cap strength at the time of forming

With regard to the cap manufactured in Example 2, presence or absence of breakages was checked visually. The results are shown in Table 1. In the table, each symbol represents as follows. ○: no breakage, Δ: the number of broken caps is 15% or less of the total, x: the number of broken caps exceeds 15% of the total.

### (3) Continuous formability

It was checked whether the formed caps adhere to the forming die when forming process is conducted at 13000 shots per hour. The results are shown in Table 1. In the table, each symbol represents as follows. ○: did not adhere, ×: adhered.

**(Table 1)**

| | Forming conditions | | | | | Results | | |
|---|---|---|---|---|---|---|---|---|
| | Shape of grooves | Angle of grooves (°) | Length of grooves (mm) | Surface treatment | Diameter of forming die (mm) Diameter of former (mm) | Shape retaining property | Cap strength | Continuous formability |
| 1 | No grooves | - | - | None | 25.0 24.5 | × | × | Δ |
| 2 | 1/16 of circumferentce | 0 | 6 | None | 25.0 24.5 | Δ | × | ○ |
| 3 | 1/24 of circumferentce | 0 | 6 | None | 25.0 24.5 | Δ | Δ | ○ |
| 4 | 1/32 of circumferentce | 0 | 10 | None | 25.0 24.5 | ○ | Δ | ○ |
| 5 | 1/40 of circumferentce | 0 | 10 | None | 25.0 24.5 | Δ | Δ | ○ |
| 6 | 1/32 of circumferentce | 15 | 10 | Hard chrome | 25.0 24.5 | ○ | × | ○ |
| 7 | 1/32 of circumferentce | 0 | 4 | Hard chrome | 25.0 24.5 | ○ | Δ | ○ |
| 8 | 1/32 of circumferentce | 0 | 4 | Hard chrome | 26.0 24.5 | Δ | Δ | ○ |
| 9 | 1/32 of circumferentce | 0 | 4 | Nickel-boron | 25.0 24.5 | ○ | ○ | ○ |
| 10 | 1/32 of circumferentce | 0 | 4 | Nickel-boron | 26.0 24.5 | Δ | ○ | ○ |

### [Results of characteristic test]

### (1) Shape of the inner circumferential surface of the forming die

The shape of the grooves on the inner circumferential surface of the forming die exhibited relevance to the shape retaining property. Under the conditions of Example 2 (thickness of the packaging material: 200 pm; diameter of the formed cap: 24.5 mm; length of the skirt part: 5 mm), the best shape retaining property was obtained when grooves whose size was 1/32 of the inner circumference (25.0 mm in diameter) of the forming die were provided.

### (2) Angle of the grooves on the inner circumferential surface of the forming die

In the case where the angle of the grooves was 0° (parallel to the setting-in direction of the former), there was less breakage of caps at the time of forming process than the case where the angle of the grooves was 15°.

### (3) Surface treatment of the inner circumferential surface of the forming die

In the case where a nickel-boron treatment was conducted as a surface treatment, breakage of caps at the time of forming process was reduced and the shape retaining property was also improved in comparison to the case where no surface treatment was conducted, or hard chrome treatment was conducted.

### (4) Gap between the forming die and the former

When the gap between the forming die and the former was narrowed, the shape retaining property was improved.

### Industrial Applicability

The cap forming device of the present invention makes it possible to obtain caps of sealed containers, etc., having a shape retaining property by cold forming. As the cap forming device of the present invention can be applied to resin packaging materials, obtained caps and sealed containers to which the caps are applied can be scanned with metal detectors to detect a foreign matter mixed therein before any trouble arises. In addition, it is possible to collect and dispose the caps and the resin containers without separating them. As the cap forming device of the present invention does not need a heating mechanism, downsizing of the device can be conducted, and further, discard of the resin sheets can be avoided because the softening of the resin sheet which is fed into the processing area does not occur even when a trouble arises in a filling device for filling content to be filled into containers.

## Claims

1. A resin cap forming device (1) comprising a cap forming means having a forming die (7), a former (5), an operating rod for reciprocating former (6), and a cap pushing-back piston (8) for forming a resin cap material, wherein a plurality of grooves (73) or projections is provided on an inner circumferential surface (71) of the forming die (7), or a plurality of grooves or projections is provided on an outer circumferential surface of the former, parallel to the setting-in direction of the former for formation into a cap-like shape while a fold is guided to the skirt part (C2) of the cap, and wherein the grooves or projections comprise a circular arc cross-sectional shape.

2. The resin cap forming device according to claim 1, further comprising a cap material punching-out means (12) for punching out one or more cap materials from a resin sheet-like packaging material (M).

3. The resin cap forming device according to claim 1 or 2, wherein a plurality of grooves (73) is provided on the inner circumferential surface (71) of the forming die.

4. The resin cap forming device according to any one of claims 1 to 3, wherein the inner circumferential surface (71) of the forming die is surface-treated.

5. The resin cap forming device according to any one of claims 1 to 3, wherein the inner circumferential surface (71) and a mouth (72) of the forming die are surface-treated.

6. The resin cap forming device according to claim 4 or 5, wherein the surface treatment is a nickel-boron treatment.

7. The resin cap forming device according to any one of claims 1 to 6, wherein a gap between the forming die (7) and the former (5) is adjusted not to exceed 4.0 times the thickness of the resin sheet-like packaging material (M).

8. The resin cap forming device according to any one of claims 1 to 7, which is used when a resin cap is cold-formed from a resin sheet for cold forming.

9. A method for forming a resin cap, which is a method for forming a punched-out cap material into a cap-like shape comprising the steps of: punching out one or more cap materials from a resin sheet for cold forming; advancing and setting in the former (5) in the forming die (7) immediately after the cap material is punched out, while bringing the packaging material abutting a mouth (72) of the forming die; and forming a skirt part (C2) of a cap in a gap between the former and the forming die; wherein forming into a cap-like shape is conducted while a fold is guided to the skirt part of the cap by plurality of grooves (73) or projections provided on an inner circumferential surface (71) of the forming die, or a plurality of grooves or projections provided on an outer circumferential surface of the former that are provided parallel to the setting-in direction of the former and comprise a circular arc cross-sectional shape.

10. The method for forming a resin cap according to claim 9, wherein the forming into a cap-like shape is conducted while a fold is guided to the skirt part (C2) of the cap by a plurality of grooves (73) provided on the inner circumferential surface (71) of the forming die.

11. A resin cap obtained by the method according to claim 9 or 10, wherein the resin cap is consisting of a flat part (C1), a folded part (C3) and a skirt part (C2), and folds are guided into the skirt part.

12. A resin cap forming and capping device comprising: an unwinding and feeding mechanism with an unwinding pinch roll (10) for unwinding a sheet-like packaging material (M) wound on a reel (9) and an intermittent feeding pinch roll (11) for intermittently feeding the sheet-like packaging material which has been unwound; a punching-out and forming mechanism (12) with a cap material punching-out means for punching out one or more cap materials from the fed sheet-like packaging material, and a cap forming means having a forming dies (7) and a former (5) for forming a cap material punched out by the cap material punching-out means, and a capping mechanism (14) with a cap feeding means (13) for feeding a formed cap and a fitting means for fitting the cap to a container body (B),
wherein the sheet-like packaging material is a resin sheet-like packaging material; and
wherein a plurality of grooves (73) or projections is provided on the inner circumferential surface (71) of the forming die, or a plurality of grooves or projections is provided on the outer circumferential surface of the former, in the cap forming means.

## Patentansprüche

1. Vorrichtung (1) zum Formen einer Harzkappe mit einem Kappenfarmungsmittel mit einem formenden Ausformwerkzeug (7), einem Former (5), einem Betätigungsstab für einen Kolbenformer (6) und einen Kappenzurückdrückstempel (8) zum Formen eines Harzkappenmaterials, wobei eine Mehrzahl von Vertiefungen (73) oder Vorsprüngen an einer Innenumfangsfläche (71) des formenden Ausformwerkzeugs (7) vorgesehen sind, oder eine Mehrzahl von Vertiefungen oder Vorsprüngen an einer Außenumfangsfläche des Formers vorgesehen sind, parallel zu der Einsetzrichtung des Formers zum Formen in eine kappenartige Form während ein Falz in das Schürzenteil (C2) der Kappe eingerührt wird und wobei die Vertiefungen oder Vorsprünge eine Kreisbogenquerschnittsform aufweisen.

2. Vorrichtung zum Formen einer Harzkappe nach Anspruch 1 darüber hinaus mit einem Kappenmaterialatasstanzmittel (12) zum Ausstanzen einer oder mehrerer Kappenmaterialien aus einem folienförmigen Harzverpackungsmaterial (M).

3. Vorrichtung zum Formen einer Harzkappe nach Anspruch 1 oder 2, wobei eine Mehrzahl von Vertiefungen (73) auf der Innenumfangsfläche (71) des formenden Ausformwerkzeugs vorgesehen ist.

4. Vorrichtung zum Formen einer Harzkappe nach einem der Ansprüche 1 bis 3, wobei die Innenumfangsfläche (71) des formenden Ausformwerkzeugs oberflächenbehandelt ist

5. Vorrichtung zum Formen einer Harzkappe nach einem der Ansprüche 1 bis 3, wobei die Innenumfangsfläche (71) und ein Mund (72) des formenden Ausformwerkzeugs oberflächenbehandelt sind.

6. Vorrichtung zum Formen einer Harzkappe nach Anspruch 4 oder 5, wobei die Oberflächenbehandlung eine Nickel-Bohrbehandlung ist.

7. Vorrichtung zum Formen einer Harzkappe nach einem der Ansprüche 1 bis 6, wobei ein Spalt zwischen dem formenden Ausformwerkzeug (7) und dem Former (5) so eingestellt ist, dass er das Vierfache der Dicke des folienartiges Harzverpackungsmaterials (M) nicht überschreitet

8. Vorrichtung zum Bilden einer Harzkappe nach einem der Ansprüche 1 bis 7, die verwendet wird, wenn eine Harzkappe aus einer Harzfolie zur Kaltformung kaltgeformt wird.

9. Verfahren zum Formen einer Harzkappe, das ein Verfahren zum Formen eines ausgestanzten Kappenmaterials in eine kappenartige Form ist, mit den Schriften: Ausstanzen eines oder mehrerer Kappenmaterialien aus einer Harzfolie zum Kaltformen, Voranbringen und Einbringen des Formers (5) in das formende Ausformwerkzeug (7) unmittelbar nachdem das Kappenmaterial ausgestanzt wurde, während das Verpackungsmaterial benachbart zu einem Mund (72) des formenden Ausformwerkzeugs gebracht wird, und Formen eines Schürzenteils (C2) einer Kappe in einem Spalt zwischen dem Formel und dem formenden Ausformwerkzeug, wobei ein Formen in eine kappenartige Form ausgeführt wird während ein Falz in den Schürzenteil der Kappe eingefügt wird durch eine Mehrzahl von Vertiefungen (73) oder Vorsprüngen, die auf einer Innenumfangsfläche (71) des formenden Ausformwerkzeugs vorgesehen sind, oder eine Mehrzahl von Vertiefungen oder Vorsprüngen, die auf einer Außenumfangsfläche des Formers vorgesehen sind, die parallel zu der Einfügerichtung des Formers vorgesehen sind und eine Kreisbagenquerschnittsform aufweisen.

10. Verfahren zum Formen einer Harzkappe nach Anspruch 9, wobei das Formen in eine kappenartige Form ausgeführt wird während ein Falz in den Schürzenteil (C2) der Kappe eingefügt wird durch eine Mehrzahl von Vertiefungen (73), die auf einer Innenumfangsfläche (71) des formenden Ausformwerkzeugs vorgesehen sind.

11. Harzkappe, die durch das Verfahren nach Anspruch 9 oder 10 erhalten wird, wobei die Harzkappe aus einem flachen Teil (C1), einem gefalteten Teil (C3) und einem Schürzenteil (C2) besteht und Falze in den Schürzenteil eingefügt sind

12. Vorrichtung zum Formen einer Harzkappe und zum Verschließen mit: einem Abwickel- und Zuführmechanismus mit einer Abwickelabziehrolle (10) zum Abwickeln eines folienartigen Verpackungsmaterials (M), das auf eine Spule aufgewickelt ist und einer intermittierenden Zuführabziehrolle (11) zum intermittierenden Zuführen des folienartigen Verpackungsmaterials, das abgewickelt wurde, einem Ausstanz- und Formmechanismus (12) mit einem Kappenmaterialausstanzmittel zum Ausstanzen eines oder mehrerer Kappenmaterialien aus dem zugeführten folienartiges Verpackungsmaterial und einem Kappenformungsmittel mit einem formenden Ausformwerkzeug (7) und einem Former (5) zum Formen eines durch das Kappenmaterialausstanzmittel ausgestanzten Kappenmaterials und einem Verschlussmechanismus (14) mit einem Kappenzuführmittel (13) zum Zuführen einer geformten Kappe und einem Anpassmittel zum Anpassen der Kappe auf den Behälterkörper (B),
wobei das folienartige Verpackungsmaterial ein harzfolienartiges Verpackungsmaterial ist und
wobei eine Mehrzahl von Vertiefungen (73) oder Vorsprüngen auf der Innenumfangsfläche (71) des formenden Ausformwerkzeugs vorgesehen ist oder eine Mehrzahl von Vertiefungen oder Vorsprüngen auf der Außenumfangsfläche des Formers in dem Kappenformungsmittel vorgesehen ist.

## Revendications

1. Dispositif de mise en forme de bouchons en résine (1) comprenant un moyen de mise en forme de bouchons ayant un moule de mise en forme (7), un gabarit conformateur (5), une tige de commande pour le gabarit conformateur à va-et-vient (6), et un piston repoussant le bouchon (8) destiné à mettre en forme un matériau de bouchon en résine, dans lequel une pluralité de sillons (73) ou de parties saillantes sont fournis sur une surface de la circonférence interne (71) du moule de mise en forme (7), ou une pluralité de sillons ou de parties saillantes sont fournis sur une surface de la circonférence externe du gabarit conformateur, parallèlement à la direction de positionnement du gabarit conformateur destiné à la mise en forme sous une forme de type bouchon tandis qu'un pli est guidé vers la partie jupe (C2) du bouchon, les sillons ou les parties saillantes comprenant une forme d'arc transversal circulaire.

2. Dispositif de mise en forme de bouchons en résine selon la revendication 1, comprenant en outre un moyen pour découper à la matrice un matériau de bouchon (12) destiné à découper à la matrice un ou plusieurs matériaux de bouchons à partir d'un matériau de conditionnement de type feuille de résine (M).

3. Dispositif de mise en forme de bouchons en résine selon la revendication 1 ou 2, dans lequel une pluralité de sillons (73) sont fournis sur la surface de la circonférence interne (71) du moule de mise en forme.

4. Dispositif de mise en forme de bouchons en résine selon l'une quelconque des revendications 1 à 3, dans lequel la surface de la circonférence interne (71) du moule de mise en forme est traitée en surface.

5. Dispositif de mise en forme de bouchons en résine selon l'une quelconque des revendications 1 à 3, dans lequel la surface de la circonférence interne (71) et une embouchure (72) du moule de mise en forme sont traitées en surface.

6. Dispositif de mise en forme de bouchons en résine selon la revendication 4 ou 5, dans lequel le traitement de la surface est un traitement au nickel-bore.

7. Dispositif de mise en forme de bouchons en résine selon l'une quelconque des revendications 1 à 6, dans lequel un espace entre le moule de mise en forme (7) et le gabarit conformateur (5) est ajusté de sorte à ne pas excéder 4,0 fois l'épaisseur du matériau de conditionnement de type feuille de résine (M).

8. Dispositif de mise en forme de bouchons en résine selon l'une quelconque des revendications 1 à 7, qui est utilisé lorsqu'un bouchon en résine est formé à froid à partir d'une feuille de résine destinée à une mise en forme à froid.

9. Procédé de mise en forme d'un bouchon en résine, qui est un procédé destiné à mettre en forme un matériau de bouchon découpé à la matrice en une forme de type bouchon comprenant les étapes consistant à : découper à la matrice un ou plusieurs matériaux de bouchons à partir d'une feuille de résine destinée à une mise en forme à froid ; faire avancer et positionner le gabarit conformateur (5) dans le moule de mise en forme (7) immédiatement après que le matériau du bouchon ait été découpé à la matrice, tout en positionnant le matériau de conditionnement contre une embouchure (72) du moule de mise en forme; et former une partie jupe (C2) d'un bouchon dans un espace entre le gabarit conformateur et le moule de mise en forme ; dans lequel l'étape consistant en la mise en forme en une forme de type bouchon est réalisée tandis qu'un pli est guidé vers la partie jupe du bouchon par le biais d'une pluralité de sillons (73) ou de parties saillantes fournis sur une surface de la circonférence interne (71) du moule de mise en forme, ou d'une pluralité de sillons ou de parties saillantes fournis sur une surface de la circonférence externe du gabarit conformateur, qui sont fournis parallèlement à la direction de positionnement du gabarit conformateur et qui comprennent une forme d'arc transversal circulaire.

10. Procédé de mise en forme d'un bouchon en résine selon la revendication 9, dans lequel l'étape consistant en la mise en forme en une forme de type bouchon est réalisée tandis qu'un pli est guidé vers la partie jupe (C2) du bouchon par le biais d'une pluralité de sillons (73) fournis sur la surface de la circonférence interne (71) du moule de mise en forme.

11. Bouchon en résine obtenu par le procédé selon la revendication 9 ou 10, le bouchon en résine étant constitué d'une partie plate (C1), d'une partie pliée (C3) et d'une partie jupe (C2), et les plis étant guidés à l'intérieur de la partie jupe.

12. Dispositif de mise en forme et d'encapsulage par des bouchons en résine comprenant : un mécanisme de déroulage et d'alimentation comprenant un cylindre d'entraînement par déroulage (10) destiné à dérouler un matériau de conditionnement de type feuille (M) enroulé sur une bobine (9) et un cylindre d'entraînement d'alimentation par intermittence (11) destiné à alimenter par intermittence le matériau de conditionnement de type feuille qui a été déroule ; un mécanisme de découpage à la matrice et de mise en forme (12) comprenant un moyen de découpage à la matrice destiné à découper à la matrice un ou plusieurs matériaux de bouchons à partir du matériau de conditionnement de type feuille alimenté, et un moyen de mise en forme de bouchons comprenant un moule de mise en forme (7) et un gabarit conformateur (5) destiné à mettre en forme un matériau de bouchon découpé à la matrice par le moyen de découpage à la matrice du matériau de bouchon, et un mécanisme d'encapsulage (14) comprenant un moyen d'alimentation en bouchons (13) destiné à alimenter un bouchon formé et un moyen d'ajustement afin d'ajuster le bouchon sur un corps de conteneur (B),
dans lequel le matériau de conditionnement de type feuille est un matériau de conditionnement de type feuille de résine ; et
dans lequel une pluralité de sillons (73) ou de parties saillantes sont fournis sur la surface de la circonférence interne (71) du moule de mise en forme, ou une pluralité de sillons ou de parties saillantes sont fournis sur la surface de la circonférence externe du gabarit conformateur, dans le moyen de mise en forme des bouchons.
